(19)

Europäisches
Patentamt
European
Patent Office
Office européen
des brevets

(11) **EP 4 394 050 A1**

(12) **EUROPEAN PATENT APPLICATION**
published in accordance with Art. 153(4) EPC

(43) Date of publication:
**03.07.2024  Bulletin 2024/27**

(21) Application number: **22886419.5**

(22) Date of filing: **10.08.2022**

(51) International Patent Classification (IPC):
**C21C 5/28** (2006.01)         **C21C 5/30** (2006.01)
**C21C 5/46** (2006.01)

(52) Cooperative Patent Classification (CPC):
**C21C 5/28; C21C 5/30; C21C 5/46**

(86) International application number:
**PCT/JP2022/030648**

(87) International publication number:
**WO 2023/074085 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **28.10.2021   JP 2021176692**

(71) Applicant: **JFE Steel Corporation
Tokyo 100-0011 (JP)**

(72) Inventors:
• **KASE, Hiroto
Tokyo 100-0011 (JP)**

• **ITO, Sota
Tokyo 100-0011 (JP)**
• **SANO, Keisuke
Tokyo 100-0011 (JP)**
• **YOKOMORI, Rei
Tokyo 100-0011 (JP)**
• **OGASAWARA, Futoshi
Tokyo 100-0011 (JP)**
• **KAWABATA, Ryo
Tokyo 100-0011 (JP)**
• **ITO, Tomohiko
Tokyo 100-0011 (JP)**

(74) Representative: **Grünecker Patent- und
Rechtsanwälte
PartG mbB
Leopoldstraße 4
80802 München (DE)**

(54) **DEVICE FOR ESTIMATING AMOUNT OF SLAG IN FURNACE, METHOD FOR ESTIMATING
AMOUNT OF SLAG IN FURNACE, AND METHOD FOR PRODUCING MOLTEN STEEL**

(57)     A furnace slag amount estimation device (1) includes: an input unit (11) configured to receive input data including furnace shape data for a converter, data on components and temperatures of molten metal and slag before start of or during blowing treatment, and slag height data in a furnace of the converter; a slag bulk density calculation unit (13) configured to calculate a slag bulk density after the converter is tilted, using the input data and a model; a slag volume calculation unit (14) configured to calculate a slag volume in the furnace after the converter is tilted, using the slag height data after the converter is tilted, the furnace shape data, and a model; and a slag weight calculation unit (15) configured to calculate a slag weight in the furnace after the converter is tilted and slag is discharged, using the calculated slag bulk density and the calculated slag volume.

FIG. 1

**Description**

TECHNICAL FIELD

The present disclosure relates to a furnace slag amount estimation device, a furnace slag amount estimation method, and a molten steel production method. The present disclosure relates, in particular, to a furnace slag amount estimation device, a furnace slag amount estimation method, and a molten steel production method by which a furnace slag amount in refining equipment in the iron and steel industry is estimated.

BACKGROUND

At steelworks, the components and the temperature of hot metal tapped out of a blast furnace are adjusted in refining equipment, such as pretreatment equipment, converters, or secondary refining equipment. The converters are a process of blowing oxygen into the furnaces, so as to remove impurities from molten metal and raise the temperature, and they play a very important role, for example, in controlling steel quality and rationalizing refining costs. In recent years, the development of hot metal pretreatment treatment methods (desiliconization treatment and dephosphorization treatment) in converters has progressed, and a method is becoming popular in which a converter is tilted after blowing treatment so as to discharge slag in the furnace out of the furnace (slag-removal), and then the converter is turned upright so as to perform continuing blowing treatment. In this method, the charge amount of auxiliary raw materials, such as lime, is adjusted so as to obtain desired components of slag in blowing (secondary blowing) after the slag-removal, based on the components of slag at the end of blowing (primary blowing) before the slag-removal and a furnace slag weight after the slag-removal. Conventionally, the furnace slag weight after the slag-removal has been calculated by an operator by visually estimating the slag amount discharged out of the furnace by the slag-removal, or by weighing a pot that receives the slag discharged out of the furnace by the slag-removal and measuring the weight of the discharged slag, to thereby determine the charge amount of auxiliary raw materials in the secondary blowing. However, visual estimation is inaccurate because slag is bubbled during blowing treatment due to CO gas or the like generated by reaction in the furnace, and its bulk density varies significantly. Furthermore, it is difficult to prevent slag from overflowing from the pot during the slag-removal process. Moreover, the effects of metal spilled during the slag-removal and iron droplet in slag cannot be eliminated, and the accuracy of measuring the slag weight by a weighing instrument is not always high. The low accuracy of estimating the furnace slag weight after the slag-removal tends to lead to excessive charging of auxiliary raw materials in the secondary blowing, thus resulting in a lower cost efficiency and a lower iron yield rate.

Patent Literature (PTL) 1 therefore describes a method of estimating calming properties of slag in a furnace by measuring a slag height in the furnace multiple times before slag-removal, and estimating a furnace slag weight after the slag-removal, based on the calming properties and a tilt pattern of the converter during the slag-removal.

CITATION LIST

Patent Literature

PTL 1: WO 2020/129887 A1

SUMMARY

(Technical Problem)

In PTL 1, however, the furnace slag weight after the slag-removal is calculated, based on a slag volume in the furnace that has been geometrically calculated from the calming properties during the slag-removal and a tilt angle of the converter. For example, when the shape of a furnace throat of the converter changes due to wear of refractory bricks, attachment of skull, or the like, the relationship between the tilt angle of the converter and the furnace slag volume changes, and the estimated value of the furnace slag weight deviates from the actual value. In addition, the shape in the vicinity of the furnace throat of the converter may change due to attachment of skull or the like, even during one time of blowing treatment. It is therefore difficult to obtain accurate shape information at all times. Thus, it is difficult to estimate the furnace slag weight after the slag-removal with high accuracy by such a method of geometrically calculating the furnace slag volume from the tilt angle of the converter.

It would be helpful to provide a furnace slag amount estimation device, a furnace slag amount estimation method, and a molten steel production method by which a furnace slag weight after slag-removal can be estimated with high accuracy.

(Solution to Problem)

A furnace slag amount estimation device according to an embodiment of the present disclosure is a furnace slag amount estimation device that estimates a slag weight remaining inside a converter in blowing treatment that includes a process of tilting the converter so as to discharge slag in a furnace out of the furnace, the furnace slag amount estimation device including:

an input unit configured to receive input data including furnace shape data for the converter, data on components and temperatures of molten metal and slag before start of or during the blowing treatment, and slag height data in the furnace of the converter;
a slag bulk density calculation unit configured to calculate a slag bulk density after the converter is tilted and the slag is discharged, using the input data and a slag bulk density estimation model;
a slag volume calculation unit configured to calculate a slag volume in the furnace after the converter is tilted and the slag is discharged, using the slag height data after the converter is tilted and the slag is discharged, the furnace shape data, and a slag volume estimation model; and
a slag weight calculation unit configured to calculate the slag weight in the furnace after the converter is tilted and the slag is discharged, using the calculated slag bulk density and the calculated slag volume.

A furnace slag amount estimation method according to an embodiment of the present disclosure is a furnace slag amount estimation method to be executed by a furnace slag amount estimation device that estimates a slag weight remaining inside a converter in blowing treatment that includes a process of tilting the converter so as to discharge slag in a furnace out of the furnace, the furnace slag amount estimation method including:

an input step of receiving input data including furnace shape data for the converter, data on components and temperatures of molten metal and slag before start of or during the blowing treatment, and slag height data in the furnace of the converter;
a slag bulk density calculation step of calculating a slag bulk density after the converter is tilted and the slag is discharged, using the input data and a slag bulk density estimation model;
a slag volume calculation step of calculating a slag volume in the furnace after the converter is tilted and the slag is discharged, using the slag height data after the converter is tilted and the slag is discharged, the furnace shape data, and a slag volume estimation model; and
a slag weight calculation step of calculating the slag weight in the furnace after the converter is tilted and the slag is discharged, using the calculated slag bulk density and the calculated slag volume.

A molten steel production method according to an embodiment of the present disclosure includes producing molten steel, by determining a charge amount of auxiliary raw materials in secondary blowing, based on the slag weight in the furnace calculated by the above furnace slag amount estimation method, and performing refining operation.

(Advantageous Effect)

According to the present disclosure, the furnace slag amount estimation device, the furnace slag amount estimation method, and the molten steel production method by which the furnace slag weight after slag-removal can be estimated with high accuracy are provided.

BRIEF DESCRIPTION OF THE DRAWINGS

In the accompanying drawings:

FIG. 1 is a schematic diagram illustrating a configuration of a furnace slag amount estimation device according to an embodiment; and
FIG. 2 is a flowchart illustrating processing of a furnace slag amount estimation method according to an embodiment of the present disclosure.

DETAILED DESCRIPTION

Hereinafter, a furnace slag amount estimation device, a furnace slag amount estimation method, and a molten steel production method according to an embodiment of the present disclosure will be described with reference to the drawings. Here, the furnace slag amount means a slag weight remaining inside (in the furnace of) a converter.

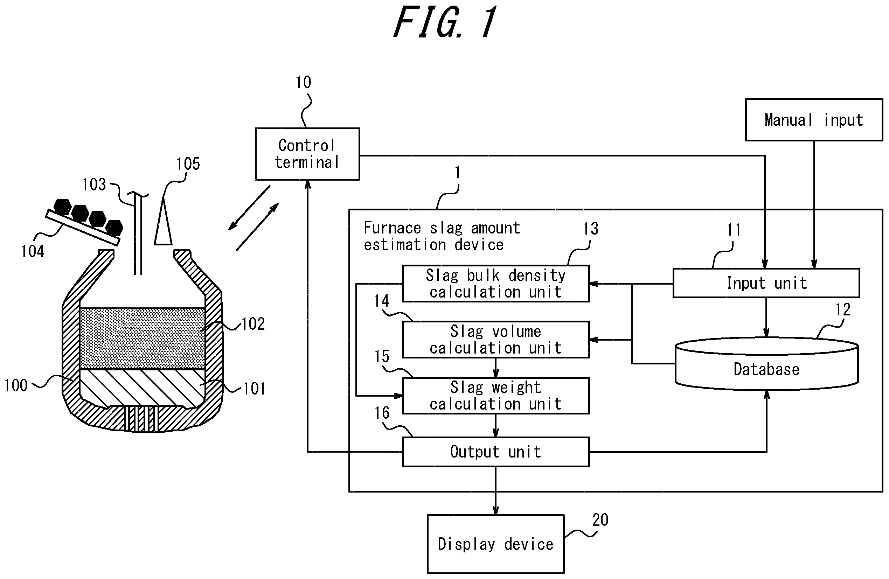

FIG. 1 is a schematic diagram illustrating a configuration of a furnace slag amount estimation device 1 according to an embodiment of the present disclosure. In the present embodiment, the furnace slag amount estimation device 1 is used as part of equipment for producing molten steel. The equipment for producing molten steel includes refining equipment, and a blowing control system that includes the furnace slag amount estimation device 1.

As illustrated in FIG. 1, the refining equipment includes a converter 100, a lance 103, a hopper 104 above the furnace, and a slag height measurement device 105. The lance 103 is arranged above molten metal 101 in the converter 100. High-pressure oxygen is ejected from a tip of the lance 103 toward the molten metal 101 located below. The high-pressure oxygen oxidizes impurities in the molten metal 101 and incorporates them into slag 102 (refining treatment). Auxiliary raw materials, including lime, carburization materials, and coolants, are charged into the converter 100 from the hopper 104 above the furnace or the like and incorporated into the molten metal 101 and the slag 102.

The slag height measurement device 105 is set at the top of the converter 100 and measures the distance from a furnace throat of the converter 100 to a surface of the slag 102 contained in the converter 100. The slag height measurement device 105 may be, for example, a microwave rangefinder. The microwave rangefinder may measure the distances to the furnace throat of the converter 100 and to the surface of the slag 102 in the converter 100, by converting time it takes to emit microwaves and receive reflected waves from the furnace throat of the converter 100 and from the surface of the slag 102 in the converter 100 into distances. The slag height may be measured at any time or continuously. Signals indicating measurement results of the slag height measurement device 105 are transmitted to a control terminal 10.

Here, in refining using the converter 100, the processes of "loading," "primary blowing," "slag-removal," "secondary blowing," and "tapping" are performed in sequence during a single charge. In the "loading" process, raw materials, such as hot metal, are loaded into the converter 100. In the "primary blowing" process, auxiliary raw materials are charged into the converter 100 for the purpose of, for example, desiliconization, or desiliconization and dephosphorization, and blowing is performed. In the "slag-removal" process, part of the slag 102 with a relatively low basicity (CaO concentration/SiO$_2$ concentration) generated in the primary blowing is discharged out of the furnace by slag-removal treatment. In the "secondary blowing" process, auxiliary raw materials are charged into the converter 100 for the purpose of dephosphorization and/or decarburization, for example. In the "tapping" process, the molten metal 101 is tapped out. Normally, these processes are repeated with multiple charges in the refining. The slag 102 from the secondary blowing of the n$^{th}$ charge that remains in the converter 100 may be carried over to the (n+1)$^{th}$ charge.

Some of the processes will be explained more concretely with reference to the refining equipment of FIG. 1. After the primary blowing ends, the lance 103 is withdrawn to the top of the converter 100, and the slag-removal treatment is conducted, by tilting the converter 100 so as to discharge the slag 102 in the furnace out of the furnace. The slag-removal treatment ends immediately before the molten metal 101 is discharged, and after the converter 100 is returned to the upright position, the lance 103 is again installed on top of the molten metal 101, and the secondary blowing is started. Blowing conditions, including the amount of auxiliary raw materials to be charged from the hopper 104 above the furnace or the like, in the secondary blowing are determined based on results of the primary blowing and results of the slag-removal treatment. The furnace slag amount estimation device 1 is a device that estimates the weight of the slag 102 in the converter 100 after the slag-removal treatment.

The blowing control system includes the control terminal 10, a display device 20, and the furnace slag amount estimation device 1 as main components. The control terminal 10 may be configured by an information processing device, such as a personal computer or a workstation. The control terminal 10 collects track record data regarding blowing treatment and slag-removal treatment, and controls blowing conditions, including the amount of auxiliary raw materials to be charged from the hopper 104 above the furnace or the like, so that the temperature and the component concentrations of the molten metal 101 and the composition of the slag 102 are within desired ranges. The display device 20 may be configured by a liquid crystal display (LCD) or cathode ray tube (CRT) display, for example. The display device 20 may display calculation results or the like that are output from the furnace slag amount estimation device 1.

The furnace slag amount estimation device 1 is configured by an information processing device, such as a personal computer or a workstation. The furnace slag amount estimation device 1 includes an input unit 11, a database 12, a slag bulk density calculation unit 13, a slag volume calculation unit 14, a slag weight calculation unit 15, and an output unit 16.

The input unit 11 is an input interface that receives various types of information related to the refining equipment. The input unit 11 may include, for example, a keyboard, a mouse, a pointing device, a data receiver, and/or a graphical user interface (GUI). The input unit 11 receives track record information, parameter setting values, or the like from the outside and writes the information into the database 12 and transmits it to the slag bulk density calculation unit 13 and the slag volume calculation unit 14. Input data is input into the input unit 11 from the control terminal 10. The input data includes furnace shape data, which indicates measurement results or calculation results regarding the furnace shape of the converter 100. The input data includes data that indicates measurement results or calculation results regarding the components and the temperature of the molten metal 101 and the slag 102 before the start of or during blowing treatment. The input data also includes slag height data, which indicates measurement results of the slag height in the furnace of the converter 100 after slag-removal treatment. Additionally, the input unit 11 can be used for manual data input (manual input) by, for example, an operator of the refining equipment. Parameter setting values for a model formula may be input manually.

The database 12 stores various measurement results and calculation results in blowing treatment and slag-removal treatment, models and parameters for calculating the furnace slag amount, and estimation results of the furnace slag amount. The database 12 is configured, for example, by a storage device, such as memory or a hard disk drive. The storage device may further store computer programs. Various types of information input through the input unit 11 and estimation results of the furnace slag amount that have been calculated by the slag weight calculation unit 15 are transmitted to the database 12. The models and parameters stored in the database 12 are to be used by the slag bulk density calculation unit 13 and the slag volume calculation unit 14.

The slag bulk density calculation unit 13, the slag volume calculation unit 14, and the slag weight calculation unit 15 are configured by an arithmetic processing device, such as a CPU. The slag bulk density calculation unit 13, the slag volume calculation unit 14, and the slag weight calculation unit 15 may be realized, for example, by the arithmetic processing device reading and executing a computer program. The slag bulk density calculation unit 13, the slag volume calculation unit 14, and the slag weight calculation unit 15 may include dedicated arithmetic devices or arithmetic circuits.

Using input data stored in the database 12 and a slag bulk density estimation model, the slag bulk density calculation unit 13 conducts calculation to estimate the bulk density of the slag 102 in the furnace after slag-removal treatment (after the converter 100 is tilted so as to discharge at least part of the slag 102). The slag bulk density calculation unit 13 may calculate the bulk density of the slag 102 using data regarding the primary blowing treatment and the slag-removal treatment that have been transmitted from the input unit 11 as the input data. The slag bulk density calculation unit 13 transmits the calculated bulk density of the slag 102 after the slag-removal treatment to the slag weight calculation unit 15.

Using measurement results regarding the height of the slag 102 in the furnace after the slag-removal treatment (slag height data), furnace shape data, and a slag volume estimation model, the slag volume calculation unit 14 calculates the volume of the slag 102 after the slag-removal treatment. The slag volume calculation unit 14 transmits the calculated volume of the slag 102 after the slag-removal treatment to the slag weight calculation unit 15.

Using the slag bulk density after the slag-removal treatment that has been calculated by the slag bulk density calculation unit 13 and the slag volume after the slag-removal treatment that has been calculated by the slag volume calculation unit 14, the slag weight calculation unit 15 calculates the slag weight in the furnace after the slag-removal treatment. The slag weight calculation unit 15 transmits the calculated furnace slag amount (weight of the slag 102 remaining in the furnace after the slag-removal treatment) to the output unit 16.

The output unit 16 transmits the furnace slag amount that has been calculated by the slag weight calculation unit 15 to the control terminal 10 and to the database 12. In secondary blowing, various manipulated variables are determined and operating conditions are changed, based on calculation results output from the furnace slag amount estimation device 1. The output unit 16 also has the function of transmitting the information calculated by the furnace slag amount estimation device 1 to the display device 20, so that the calculation results output from the furnace slag amount estimation device 1 can be displayed.

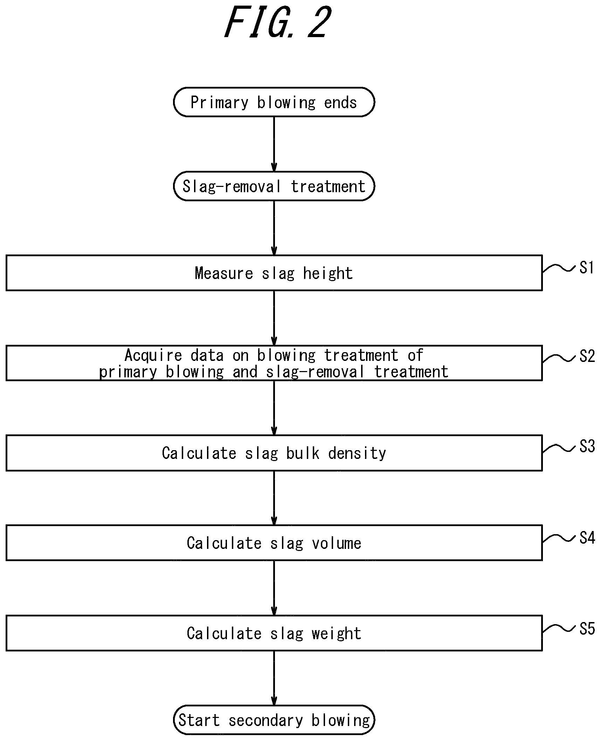

The furnace slag amount estimation device 1 with the above configuration estimates the weight of the slag 102 after the slag-removal treatment with high accuracy, by executing processing of a furnace slag amount estimation method which will be described below. Operations performed by the furnace slag amount estimation device 1 to execute the furnace slag amount estimation method will be described below with reference to the flowchart of FIG. 2.

FIG. 2 is the flowchart illustrating processing of the furnace slag amount estimation method according to an embodiment of the present disclosure. The flowchart of FIG. 2 starts at a time when primary blowing ends. That is, after the primary blowing ends, furnace slag amount estimation processing proceeds to Step S1.

In processing of Step S1, after slag-removal treatment ends, the height of the slag 102 in the converter 100 is measured. The height of the slag 102 may be measured after the converter 100 is returned to the upright position, so as to make it easy to calculate the volume as will be described later. The height of the slag 102 in the furnace may be obtained based on a single measurement value, but is preferably obtained as a representative value of the height of the slag 102 over any given period of time, by averaging multiple measurement values that vary in time and space. The measured height of the slag 102 in the furnace is transmitted to the input unit 11. This completes the processing of Step S1, and the furnace slag amount estimation processing proceeds to Step S2.

In processing of Step S2, the input unit 11 acquires data on the blowing treatment, the slag-removal treatment, or the like. More specifically, the input unit 11 acquires input data, including furnace shape data for the converter 100, data on the components and the temperatures of the molten metal 101 and the slag 102 before the start of or during the blowing treatment, and slag height data in the furnace of the converter 100. Step S2 can be referred to as an input step. Here, the furnace shape data included in the input data may be generated based on measurements of the converter 100 before the "loading" process, that is, those of the converter 100 before raw materials are loaded, and may be acquired from the control terminal 10 together with other data in Step S2. The input unit 11 also transmits track record data, parameter setting values, or the like to the database 12, the slag bulk density calculation unit 13, and the slag volume calculation unit 14. This completes the processing of Step S2, and the furnace slag amount estimation processing proceeds to Step S3.

In processing of Step S3, the slag bulk density calculation unit 13 estimates the bulk density of the slag 102 (slag bulk density $D_s$) after the slag-removal treatment using the input data stored in the database 12 and a slag bulk density estimation model. Step S3 can be referred to as a slag bulk density calculation step. Examples of the slag bulk density estimation model may include a linear combination model as illustrated in Formula (1) below.

[Math. 1]

$$D_s = \sum_i A_i \times v_i \quad \text{... Formula (1)}$$

In the formula, i denotes a parameter that identifies the item of explanatory variables obtained from results of the primary blowing treatment and results of the slag-removal treatment. vi denotes the explanatory variables. $A_i$ denotes a coefficient corresponding to each explanatory variable. The explanatory variables include at least the tilt angle at which the slag 102 begins to be discharged from the furnace throat as the converter 100 is tilted in the slag-removal treatment, and slag-removal treatment time, which is time taken to execute the slag-removal treatment. The explanatory variables may further include the maximum tilt angle during the slag-removal treatment, a calculated value of the weight of the slag 102 in the furnace at the end of the primary blowing, a calculated value of slag basicity (CaO concentration/SiO$_2$ concentration), a calculated value of the iron concentration in the slag, a calculated value of iron flushing weight in the slag, and the like. Here, when the slag begins to flow out by tilting the furnace body, the slag height is almost equal to a furnace height. The volume of the slag in the furnace, which is closely related to the bulk density, can be calculated from the tilt angle of the furnace body at which the slag begins to flow out and the furnace shape data. It is therefore important that the explanatory variables include at least the tilt angle at which the slag 102 begins to be discharged from the furnace throat. Furthermore, the slag 102 before slag-removal treatment contains a large amount of air bubbles and has a relatively low bulk density, and during the slag-removal treatment, the air bubbles are often released and the bulk density increases. Accordingly, the longer the slag-removal treatment time, the higher the bulk density of the slag 102 after the slag-removal treatment tends to be. It is therefore important that the explanatory variables include at least the slag-removal treatment time.

The slag bulk density estimation model after the slag-removal is not limited to the aforementioned linear combination model formula, and a machine learning model or the like may also be used.

Here, the machine learning model can be built based on past data stored in the database 12 prior to operation. Explanatory variables can be obtained from observable measured values and analytical values, calculated values based on these, or the like. The slag bulk density may be obtained from a calculation result of the volume of slag remaining in the furnace, a measured value of the furnace slag amount, or the like, as will be described below.

The measured value of the furnace slag amount may be obtained from the difference between the furnace slag amount before the slag-removal, which is calculated based on the charge amount of auxiliary raw materials during the primary blowing, and the furnace slag amount after the slag-removal, which is measured by the weighing instrument. The furnace slag amount may also be obtained, by calculating backwards a removed slag weight, from analytical values of the components of slag after the slag-removal and the charge amount of auxiliary raw materials during the primary blowing.

As described above, various machine learning models can be built using not only linear regression models but also objective variables and explanatory variables, which are track record values, as teacher data. A highly accurate model based on any method may be used.

The slag bulk density calculation unit 13 transmits the calculated bulk density of the slag 102 after the slag-removal treatment to the slag weight calculation unit 15. This completes the processing of Step S3, and the furnace slag amount estimation processing proceeds to Step S4.

In processing of Step S4, the slag volume calculation unit 14 calculates the volume of the slag 102 after the slag-removal treatment using the slag height data for the slag 102 in the furnace after the slag-removal treatment, the furnace shape data, and a slag volume estimation model. Step S4 can be referred to as a slag volume calculation step. In the present embodiment, the volume ($V_s$) of the slag 102 in the furnace after the slag-removal treatment is calculated by the slag volume estimation model. The slag volume estimation model illustrated in Formula (2) below uses the height ($H_{slag}$) of the slag 102 in the furnace, the furnace shape data, a measured value ($W_{metal}$) of the weight of the molten metal 101, and the specific gravity ($\rho_{metal}$) of the molten metal 101.

[Math. 2]

$$V_S = V(H_{slag}) - W_{metal} \times \rho_{metal} \quad \text{... Formula (2)}$$

Here, $V(H_{slag})$ denotes the total volume of the molten metal 101 and the slag 102 in the converter 100 that is determined from the height ($H_{slag}$) of the slag 102 in the furnace and the furnace shape data. $V(H_{slag})$ may be obtained by the integral method based on the furnace shape data, as a furnace volume from a bottom of the furnace to the height of the slag 102. Alternatively, calculated values of $V(H_{slag})$ corresponding to heights from the bottom of the furnace may be stored in the database 12 in advance, based on the furnace shape data, and $V(H_{slag})$ may be obtained by selecting a calculated value stored in the database 12 that corresponds to the height of the slag 102. Here, the measured value of the weight of the molten metal 101 and the specific gravity are obtained from measurement results or calculation results of the components of the molten metal 101 before the start of or during the blowing treatment that are included in the input data. Additionally, the furnace shape data preferably include furnace profile information measured by a laser rangefinder or the like. For example, the inside of the furnace before the primary blowing starts may be measured by the laser rangefinder, to thereby obtain distance data from a centerline of the furnace body at predetermined intervals in a vertical direction and at predetermined angles around the centerline. The acquired distance data is stored in the database 12 as a set of points in a polar coordinate system, so as to be used as the furnace body profile information to calculate the furnace volume.

When the furnace body is tilted, the tilt angle may be included as an input and the height of the slag 102 may be corrected based on the tilt angle before calculating the volume.

The slag volume estimation model is not limited to the above formula, and a machine learning model or the like may also be used.

Here, the furnace shape data may be updated at appropriate times by new measurements, so as to reflect changes in the shape or the like. The furnace shape data may also be corrected using the amount of wear in the furnace that is estimated based, for example, on the count of times the converter 100 has been used. The slag volume calculation unit 14 transmits the calculated volume of the slag 102 after the slag-removal treatment to the slag weight calculation unit 15. This completes the processing of Step S4, and the furnace slag amount estimation processing proceeds to Step S5.

In processing of Step S5, the slag weight calculation unit 15 calculates the weight of the slag 102 after the slag-removal treatment. The weight of the slag 102 after the slag-removal treatment is calculated, by multiplying the estimated value of the bulk density of the slag 102 after the slag-removal treatment that has been calculated by the slag bulk density calculation unit 13 by the volume of the slag 102 after the slag-removal treatment that has been calculated by the slag volume calculation unit 14. Step S5 can be referred to as a slag weight calculation step.

The output unit 16 transmits the weight of the slag 102 after the slag-removal treatment that has been calculated by the slag weight calculation unit 15 to the database 12. The output unit 16 also transmits the weight of the slag 102 after the slag-removal treatment to the control terminal 10. The control terminal 10 may determine conditions for secondary blowing treatment, based on results of the slag-removal treatment and results of the primary blowing treatment, including the obtained weight of the slag 102. The output unit 16 also transmits the weight of the slag 102 after the slag-removal treatment to the display device 20. An operator can change the conditions for the secondary blowing treatment in accordance with the weight of the slag 102 after the slag-removal treatment that is displayed on the display device 20. This completes the processing of Step S5, and the furnace slag amount estimation processing is completed.

Based on the slag weight remaining inside the converter 100 that is estimated by the above furnace slag amount estimation method, optimal slag design in the secondary blowing can be made. That is, based on the estimated furnace slag amount, the charge amount of auxiliary raw materials is determined so as to obtain an optimum basicity (CaO concentration/$SiO_2$ concentration), and refining operation (decarburization blowing) is conducted, to thereby produce good molten steel. Thus, based on the slag weight in the furnace calculated by the above furnace slag amount estimation method, a favorable molten steel production method can be realized.

As described above, according to the furnace slag amount estimation device 1, the furnace slag amount estimation method, and the molten steel production method according to the present embodiment, a slag weight in the furnace after slag-removal can be calculated using a calculated value of slag bulk density after the slag-removal, and a furnace slag volume that has been calculated from measurement results regarding a slag height. This makes it possible to eliminate variation factors, such as changes in the shape in the vicinity of a furnace throat of a converter, and to estimate the furnace slag weight after the slag-removal with high accuracy.

Although an embodiment of the present disclosure has been described based on the drawings and examples, it is to be noted that various modifications and changes may be easily made by those skilled in the art based on the present disclosure. Accordingly, such modifications and changes are included within the scope of the present disclosure. For example, functions or the like included in each component, each step, or the like can be rearranged without logical inconsistency, and a plurality of components, steps, or the like can be combined into one or divided. An embodiment according to the present disclosure can also be implemented as a program that is executed by a processor included in a device, or as a storage medium in which the program is recorded. It is to be understood that these are included within the scope of present disclosure.

For example, in the present embodiment, the furnace slag amount estimation method that is to be performed after slag-removal treatment without tapping is described. Here, in a case in which tapping is performed after blowing treatment and some of the slag in the furnace is carried over to the next blowing treatment, the furnace slag amount can also be estimated by the same furnace slag amount estimation method, by setting the weight of molten metal in the furnace to 0.

REFERENCE SIGNS LIST

| | |
|---|---|
| 1 | Furnace slag amount estimation device |
| 10 | Control terminal |
| 11 | Input unit |
| 12 | Database |
| 13 | Slag bulk density calculation unit |
| 14 | Slag volume calculation unit |
| 15 | Slag weight calculation unit |
| 16 | Output unit |
| 20 | Display device |
| 100 | Converter |
| 101 | Molten metal |
| 102 | Slag |
| 103 | Lance |
| 104 | Hopper above furnace |
| 105 | Slag height measurement device |

**Claims**

1. A furnace slag amount estimation device that estimates a slag weight remaining inside a converter in blowing treatment that includes a process of tilting the converter so as to discharge slag in a furnace out of the furnace, the furnace slag amount estimation device comprising:

   an input unit configured to receive input data including furnace shape data for the converter, data on components and temperatures of molten metal and slag before start of or during the blowing treatment, and slag height data in the furnace of the converter;
   a slag bulk density calculation unit configured to calculate a slag bulk density after the converter is tilted and the slag is discharged, using the input data and a slag bulk density estimation model;
   a slag volume calculation unit configured to calculate a slag volume in the furnace after the converter is tilted and the slag is discharged, using the slag height data after the converter is tilted and the slag is discharged, the furnace shape data, and a slag volume estimation model; and
   a slag weight calculation unit configured to calculate the slag weight in the furnace after the converter is tilted and the slag is discharged, using the calculated slag bulk density and the calculated slag volume.

2. The furnace slag amount estimation device according to claim 1, wherein the slag bulk density estimation model uses, as inputs, at least explanatory variables including a tilt angle at which the slag begins to flow out as the converter is tilted, and slag-removal treatment time, and uses, as an output, the slag bulk density.

3. The furnace slag amount estimation device according to claim 1 or 2, wherein the slag volume estimation model is configured to calculate a furnace volume from a bottom of the furnace to a height of slag, based on the furnace shape data obtained by measuring a shape in the furnace before the blowing treatment and on the slag height data.

4. The furnace slag amount estimation device according to any one of claims 1 to 3, wherein the slag height data is measured by a microwave rangefinder.

5. A furnace slag amount estimation method to be executed by a furnace slag amount estimation device that estimates a slag weight remaining inside a converter in blowing treatment that includes a process of tilting the converter so as to discharge slag in a furnace out of the furnace, the furnace slag amount estimation method comprising:

an input step of receiving input data including furnace shape data for the converter, data on components and temperatures of molten metal and slag before start of or during the blowing treatment, and slag height data in the furnace of the converter;

a slag bulk density calculation step of calculating a slag bulk density after the converter is tilted and the slag is discharged, using the input data and a slag bulk density estimation model;

a slag volume calculation step of calculating a slag volume in the furnace after the converter is tilted and the slag is discharged, using the slag height data after the converter is tilted and the slag is discharged, the furnace shape data, and a slag volume estimation model; and

a slag weight calculation step of calculating the slag weight in the furnace after the converter is tilted and the slag is discharged, using the calculated slag bulk density and the calculated slag volume.

6. The furnace slag amount estimation method according to claim 5, wherein the slag bulk density estimation model uses, as inputs, at least explanatory variables including a tilt angle at which the slag begins to flow out as the converter is tilted, and slag-removal treatment time, and uses, as an output, the slag bulk density.

7. The furnace slag amount estimation method according to claim 5 or 6, wherein the slag volume estimation model is configured to calculate a furnace volume from a bottom of the furnace to a height of slag, based on the furnace shape data including furnace profile information obtained by measuring a shape in the furnace before the blowing treatment and on the slag height data.

8. The furnace slag amount estimation method according to any one of claims 5 to 7, wherein the slag height data is measured by a microwave rangefinder.

9. A molten steel production method comprising producing molten steel, by determining a charge amount of auxiliary raw materials in secondary blowing, based on the slag weight in the furnace calculated by the furnace slag amount estimation method according to any one of claims 5 to 8, and performing refining operation.

# FIG. 1

# FIG. 2

```
        ( Primary blowing ends )
                  │
                  ▼
        ( Slag-removal treatment )
                  │
                  ▼
┌─────────────────────────────────────┐
│        Measure slag height          │ ～S1
└─────────────────────────────────────┘
                  │
                  ▼
┌─────────────────────────────────────┐
│   Acquire data on blowing treatment of │ ～S2
│ primary blowing and slag-removal treatment │
└─────────────────────────────────────┘
                  │
                  ▼
┌─────────────────────────────────────┐
│      Calculate slag bulk density     │ ～S3
└─────────────────────────────────────┘
                  │
                  ▼
┌─────────────────────────────────────┐
│        Calculate slag volume        │ ～S4
└─────────────────────────────────────┘
                  │
                  ▼
┌─────────────────────────────────────┐
│        Calculate slag weight        │ ～S5
└─────────────────────────────────────┘
                  │
                  ▼
        ( Start secondary blowing )
```

## INTERNATIONAL SEARCH REPORT

| International application No. |
|---|
| **PCT/JP2022/030648** |

**A. CLASSIFICATION OF SUBJECT MATTER**

*C21C 5/28*(2006.01)i; *C21C 5/30*(2006.01)i; *C21C 5/46*(2006.01)i
FI:    C21C5/28 B; C21C5/28 H; C21C5/30 Z; C21C5/46 B

According to International Patent Classification (IPC) or to both national classification and IPC

**B. FIELDS SEARCHED**

Minimum documentation searched (classification system followed by classification symbols)

C21C5/28; C21C5/30; C21C5/46

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/129887 A1 (NIPPON STEEL CORP.) 25 June 2020 (2020-06-25)<br>    claims 1-10, paragraphs [0008], [0013]-[0070], fig. 1-6 | 1-9 |
| Y | | 1-9 |
| Y | WO 2018/020929 A1 (NIPPON STEEL & SUMITOMO METAL CORP.) 01 February 2018 (2018-02-01)<br>    claims 1-6, paragraphs [0007], [0019]-[0048], fig. 1-8 | 1-9 |
| A | JP 2015-218338 A (JFE STEEL CORP.) 07 December 2015 (2015-12-07)<br>    entire text | 1-9 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 September 2022** | **20 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/030648**

| Patent document cited in search report | | | Publication date (day/month/year) | Patent family member(s) | | | Publication date (day/month/year) |
|---|---|---|---|---|---|---|---|
| WO | 2020/129887 | A1 | 25 June 2020 | CN | 113195746 | A | |
| | | | | KR | 10-2021-0091793 | A | |
| WO | 2018/020929 | A1 | 01 February 2018 | CN | 108779504 | A | |
| | | | | KR | 10-2018-0117128 | A | |
| JP | 2015-218338 | A | 07 December 2015 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020129887 A1